(19) Europäisches Patentamt
European Patent Office
Office européen des brevets

(11) EP 2 717 076 B1

(12) **EUROPEAN PATENT SPECIFICATION**

(45) Date of publication and mention of the grant of the patent:
**28.10.2015 Bulletin 2015/44**

(21) Application number: **12793781.1**

(22) Date of filing: **22.05.2012**

(51) Int Cl.:
***G02B 5/30** (2006.01)* ***C09B 33/28** (2006.01)*
***C09B 45/28** (2006.01)* ***G02F 1/1335** (2006.01)*

(86) International application number:
**PCT/JP2012/063048**

(87) International publication number:
**WO 2012/165223 (06.12.2012 Gazette 2012/49)**

(54) **DYE-BASED POLARIZING ELEMENT AND POLARIZING PLATE**

FARBSTOFFBASIERTES POLARISIERENDES ELEMENT UND POLARISATIONSPLATTE

PLAQUE ET ÉLÉMENT DE POLARISATION À BASE DE COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 JP 2011120722**

(43) Date of publication of application:
**09.04.2014 Bulletin 2014/15**

(73) Proprietors:
- **Nippon Kayaku Kabushiki Kaisha**
  **Tokyo 102-8172 (JP)**
- **Polatechno Co., Ltd.**
  **Joetsu-shi, Niigata 944-0101 (JP)**

(72) Inventors:
- **MOCHIZUKI Noriaki**
  **Tokyo 115-8588 (JP)**
- **HIGETA Takahiro**
  **Tokyo 115-8588 (JP)**
- **NISHIGUCHI Takuto**
  **Tokyo 115-8588 (JP)**

(74) Representative: **Gille Hrabal**
**Brucknerstrasse 20**
**40593 Düsseldorf (DE)**

(56) References cited:
**JP-A- 3 000 769** **JP-A- 5 053 014**
**JP-A- 7 018 192** **JP-A- 57 145 155**

EP 2 717 076 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a dye-based polarizing element and a polarizing plate using the same.

### Background of the Invention

A polarizing element is generally produced by adsorbing and orienting iodine, which is a dichromatic pigment, or a dichromatic dye onto a polyvinyl alcohol-based resin film. Onto at least one side of this polarizing element, a protection film comprising triacetyl cellulose and the like is bonded through an adhesive layer to produce a polarizing plate, which is used in a liquid crystal display and the like. A polarizing plate using iodine as the dichromatic pigment is called an iodine-based polarizing plate, and on the other hand, a polarizing plate using the dichromatic dye as a dichromatic pigment is called the dye-based polarizing plate. Among them, the dye-based polarizing plate is characterized by having a high heat resistance, a high moist heat durability and a high stability, and having a high selectivity of the color by combination due to development of pigments having various colors although it has problems of low transmissivity, namely, low contrast to a polarizing plate having the same the polarization degree in comparison to the iodine-based polarizing plate.

Up to now, as a dye coloring a papermaking raw material and a cellulose-based fiber to colorfast blue, C. I. Blue 15, 200, 202, 203 and the like are known, which are frequently used in the papermaking industry and the dye industry. However, common defects of these dyes when used as raw materials, are that dianisidine used as a main raw material is a toxic chemical substance corresponding to a specified chemical substance Class I, and that the pigment itself is also a dianisidine-based pigment, and thus it is essential to comply Industrial Safety and Health Law in use of dianisidine, and necessary to work under very strict protection equipment, which is a great constraint with respect to management of the safety and health, and improvement of the productivity.

On the other hand, as other blue dyes than dianisidine, there are, for example, C. I. Direct Blue 67, 78, 106, 108 and the like. However, any of them obviously has a poor dyeing affinity in comparison to the dianisidine-based blue dye. Namely, it is difficult to easily obtain a blue dye that is colorfast and has good dyeing affinity without use of dianisidine, and which have leaded to the situations that a blue dye using dianisidine is widely produced and used despite the facts that dianisidine is a toxic chemical substance corresponding to the specified chemical substance Class I, and protection equipment for a worker to avoid the exposure requires a great expense. Accordingly, it has been strongly desired for a long time to obtain a blue dye that is colorfast and has a good dyeing affinity without use of a raw material corresponding to the specified chemical substance such as dianisidine not only in the dye industry and the papermaking industry, but also in the development of a polarizing plate. Particularly, in the development of a polarizing element, it is very difficult for a polarizing plate to have a high polarizing property as a premise, and in addition, have a polarizing function, color and durability in combination.

In addition, in recent years, as the intensity of a light source for optical use increases, such intense light, and heat generated therefrom have leaded to a problem of discoloration of a polarizing plate, and thus, demand for improvement thereof is high.

### Citation List

#### Patent Literature

Patent Literature 1: JP 64-5623 B
Patent Literature 2: JP 7-18192 A
Patent Literature 3: JP 2985408 B1
Patent Literature 4: JP 2004-075719 A

#### Non-Patent Literature

Non-Patent Literature 1: Dye chemistry; Written by Hosoda Yutaka

Summary of Invention

Problem to be Solved

Patent Literatures 1 and 2 disclose an usable blue dye without use of a raw material belonging to the specified chemical substance such as dianisidine. In addition, Patent Literature 3 discloses a polarizing plate obtained by incorporating the patent disclosed in Patent Literature 1 into a polyvinyl alcohol film and stretching the film.

However, it is understood that the pigments of Patent Documents 1 to 3 are low in the light stability as described in Example 25 of Patent Document 2, and a polarizing element obtained by incorporating the pigments into a polyvinyl alcohol-based film and stretching the film is also low in the light stability in a similar manner. For such reasons, it is demanded to develop a polarizing element having a good polarizing property, and having a high durability without use of a raw material corresponding to a specified chemical substance such as dianisidine.

Solution to Problem

The inventors investigated earnestly to solve the problems, and as a result, newly found a polarizing element using a pigment having a specific structure.

Namely, the invention relates to the followings:

(1) A polarizing element that comprises a stretched film of a polyvinyl alcohol resin or a derivative thereof containing dichromatic pigments, in which at least one of the dichromatic pigments is an azo compound represented by Formula (1) or a salt thereof:

[Chemical Formula 1]

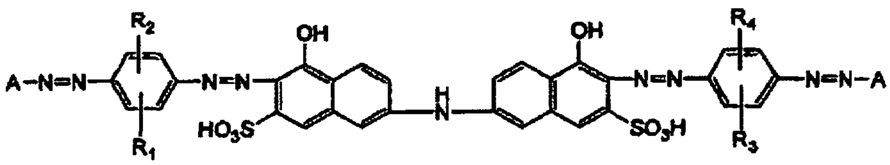

(1)

(wherein, A represents a naphtyl group or a benzene ring that is unsubstituted or has one or more of substituents selected from a group consisting of a sulfo group, an alkyl group, an alkoxy group, an alkoxy group having a sulfo group, a carboxy group, a nitro group, an amino group, and a substituted amino group; and, R1, R2, R3 and R4 each independently represent a hydrogen atom, an alkyl group, an alkoxy group, a sulfo group, or an alkoxy group having a sulfo group.)

(2) The polarizing element according to (1), in which the dichromatic pigment is a compound represented by Formula (2), or a salt thereof:

[Chemical Formula 2]

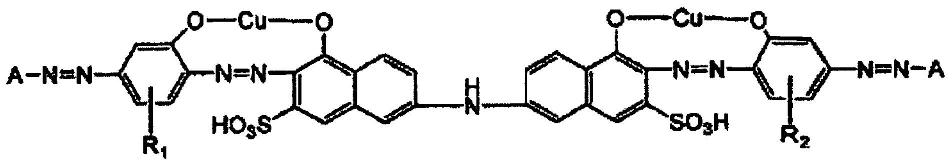

(2)

(wherein, A represents a naphtyl group or a benzene ring that is unsubstituted or has one or more of substituents selected from a group consisting of a sulfo group, an alkyl group, an alkoxy group, an alkoxy group having a sulfo group, a carboxy group, a nitro group, an amino group, and a substituted amino group; and, R1 and R2 each independently represent a hydrogen atom, an alkyl group, an alkoxy group, a sulfo group, or an alkoxy group having a sulfo group.)

(3) A polarizing plate in which a protection layer is disposed on one side, or both sides of the polarizing element according to (1) or (2).

Effects of Invention

The polarizing element or the polarizing plate of the invention has a good polarizing property by using a blue dye that is colorfast and has a good dyeing affinity without use of a raw material corresponding to a specified chemical substance such as dianisidine.

Detailed Description of the Invention

Hereinafter, the invention is described in detail.

The invention is a polarizing element that comprises a stretched film of a polyvinyl alcohol resin or a derivative thereof containing dichromatic pigments, in which at least one of the dichromatic pigments is an azo compound represented by Formula (1) or a salt thereof.

[Chemical Formula 3]

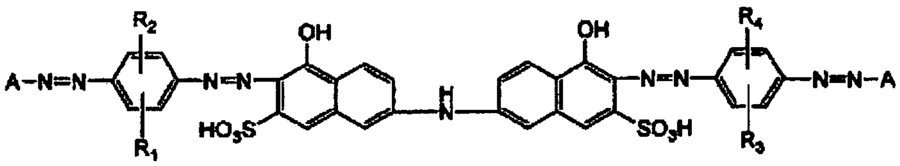

(1)

(wherein, A represents a naphtyl group or a benzene ring that is unsubstituted or has one or more of substituents selected from a group consisting of a sulfo group, an alkyl group, an alkoxy group, an alkoxy group having a sulfo group, a carboxy group, a nitro group, an amino group, and a substituted amino group; and, R1, R2, R3 and R4 each independently represent a hydrogen atom, an alkyl group, an alkoxy group, a sulfo group, or an alkoxy group having a sulfo group. Here, the alkyl group, the alkoxy group, or the alkoxy group having a sulfo group may be a lower group, preferably a group comprising 1 to 3 carbon atoms ($C_{1-3}$ group).)

In addition, the dichromatic pigment is a compound represented by Formula (2), or a salt thereof, whereby to have a more favorable polarizing property, and also have high durability.

[Chemical Formula 4]

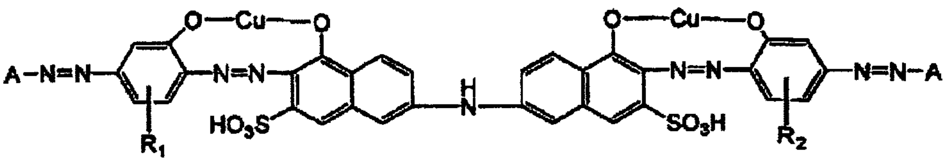

(2)

(wherein, A represents a naphtyl group or a benzene ring that is unsubstituted, or has one or more of substituents selected from a group consisting of a sulfo group, an alkyl group, an alkoxy group, an alkoxy group having a sulfo group, a carboxy group, a nitro group, an amino group, and a substituted amino group; and, R1 and R2 each independently represent a hydrogen atom, an alkyl group, an alkoxy group, a sulfo group, or an alkoxy group having a sulfo group. Here, the alkyl group, the alkoxy group, or the alkoxy group having a sulfo group may be a lower group, preferably a $C_{1-3}$ group.)

Hereinafter, the azo compound represented by Formula (1) or a salt thereof is referred to as the "pigment of Formula (1)", and the compound represented by (2), or a salt thereof is referred to as the "pigment of Formula (2)".

The pigment of Formula (2) may be preferably the compound represented by the compound 1, or the compound 2, or a salt thereof, and most preferably the compound 2.

[Chemical Formula 5]

Compound 1

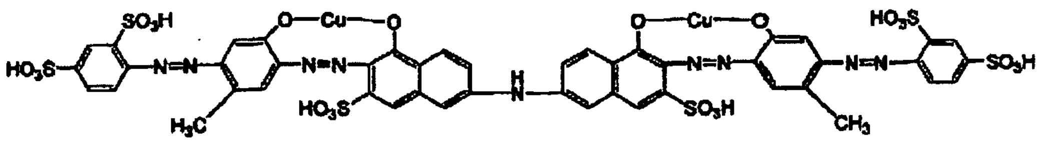

[Chemical Formula 6]

Compound 2

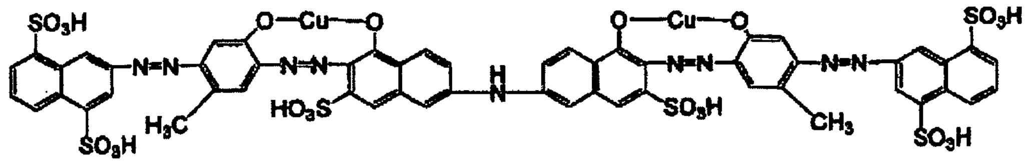

The azo compound represented by Formula (1) or a salt thereof can be easily produced by performing a known diazotization and coupling in accordance with an ordinary method of producing an azo dye as described in Non-Patent Literature 1. As a specific production method, when A in Formula (1) is a naphtyl group that is unsubstituted, or has one or more of substituents selected from a group consisting of a sulfo group, an alkyl group, an alkoxy group, an alkoxy group having a sulfo group, a carboxy group, a nitro group, an amino group, and a substituted amino group, naphtyl amine sulfonic acids, or aminonaphtholsulfonic acids are sulfo-alkylated by the production method represented by pp35 in Patent Document 4, and the obtained sulfo alkoxy naphtyl amine sulfonic acids are diazotized, and subjected to first coupling with the aniline of Formula (3), to obtain a mono-azo-amino compound represented by Formula (4). When A in Formula (1) is a benzene ring that is unsubstituted, or has one or more of substituents selected from a group consisting of a sulfo group, an alkyl group, an alkoxy group, an alkoxy group having a sulfo group, a carboxy group, a nitro group, an amino group, and a substituted amino group, the anilines of Formula (3), or phenol is sulfo-alkylated by the production method represented by pp35 in Patent Literature 4, and the obtained sulfo alkoxy aniline acids are diazotized, and subjected to first coupling with the aniline of Formula (3), to obtain a mono-azo-amino compound represented by Formula (4). The amine represented by Formula (4) at this time is preferably, for example, p-cresidine, 2,5-dimethoxy aniline and the like.

[Chemical Formula 7]

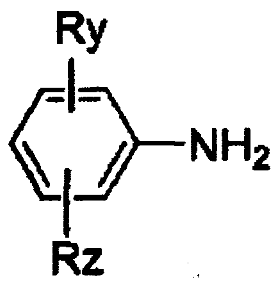

(3)

(wherein, Ry and Rz represent the same meanings as R1 to R4 in Formula (1).)

[Chemical Formula 8]

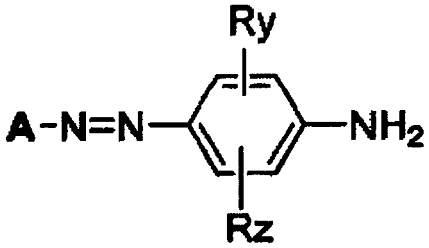

(4)

(wherein, Ry and Rz represent the same meanings as R1 to R4 in Formula (1). A represents the same meaning as that in Formula (1).)

An aminoazo compound represented by Formula (4) is diazotized with a known method, and subjected to alkali coupling with N,N-bis(l-hydroxy-3-sulfo-6-naphtyl) amine (conventional name: di-J acid) at 10 to 20°C to obtain the compound of Formula (1).

When at least one of R1 or R2, and at least one of R3 or R4 are methoxy groups in the compound of Formula (1), the compound of Formula (2) can be obtained. When at least one of R1 or R2, and at least one of R3 or R4 are methoxy groups, for example, copper sulfate, ammonia water, amino alcohol and hexamethylene tetramine are added, and copperization reaction is performed at 85 to 95°C, to obtain a solution containing the compound of Formula (2).

Then, this solution is evaporated to dryness, or salted out, filtered and dried, and crushed to obtain pulverized compound represented by Formula (1) or (2) of the present application. The compound obtained in this manner is represented by Formula (1) or (2) and is generally used as a sodium salt, but may be also used as a lithium salt, a potassium salt, an ammonium salt, an alkyl amine salt, or the like.

The pigments represented by Formulae (1) and (2) may be used in combination with other organic pigments such that hue correction and polarizing performance can be improved. The organic pigment used in this case may be any pigment having an absorption property in a different wavelength region from the absorption wavelength region of the pigment used in the invention, and having the high polarizing property. Such a pigment is not particularly limted to dichromatic dye, and may be those dyeing a hydrophilic polymer. Examples of the dichromatic dye include azo-based, anthraquinone-based, and quinophthalone-based dichromatic dyes, and also include pigments described in a color index. Examples of the dichromatic dye include C. I. Direct. Yellow 12, C. I. Direct. Yellow 28, C. I. Direct. Yellow 44, C. I. Direct. Orange 26, C. I. Direct. Orange 39, C. I. Direct. Orange 107, C. I. Direct. Red 2, C. I. Direct. Red 31, C. I. Direct. Red 79, C. I. Direct. Red 81, C. I. Direct. Red 247, C. I. Direct. Green 80, C. I. Direct. Green 59, and the organic dyes described in JP 2001-33627 A, JP 2002-296417 A, JP 2003-215338 A, WO 2004/092282, JP 2001-0564112 A, JP 2001-027708 A, JP 11-218611 A, JP 11-218610 A, and JP 60-156759 A. Such organic dyes may be used as a free acid, and in addition, may be used as an alkali metal salt (for example, Na salt, K salt, Li salt), an ammonium salt, or a salt of amines. However, the dichromatic dye is not limited to these, and a known dichromatic compound may be used, which is preferably an azo-based dye. In addition to the dichromatic dyes described above, other organic dyes may be used in combination as necessary.

The kind of the organic dye combined varies depending on the intended polarizing element, which may be a polarizing element of neutral color, a color polarizing element for a liquid crystal projector, or another color polarizing element, respectively. The combination ratio is not particularly limited, and the combination amount may be arbitrarily set according to a light source, a durability, required hue, and the like.

The pigments represented by Formulae (1) and (2) are impregnated into a polyvinyl alcohol resin or a derivative thereof. A method of producing the polyvinyl alcohol resin constituting the polarizing element is not particularly limited, but, for example, a polyvinyl acetate resin may be saponified. Examples of the polyvinyl acetate resin include polyvinyl acetate, which is a homopolymer of vinyl acetate, and in addition, a copolymer of vinyl acetate and another monomer copolymerizable with vinyl acetate, and the like. Examples of the another monomer copolymerizable with vinyl acetate include, for example, unsaturated carboxylic acids, olefins, vinyl ethers, unsaturated sulfonic acids, or the like. The saponification degree of the polyvinyl alcohol resin is ordinarily, preferably 85 to 100 mole%, and more preferably 95 mole% or more. This polyvinyl alcohol resin may be further modified. For example, polyvinyl formal, polyvinyl acetal, and the like modified with aldehydes may be also used. In addition, the polymerization degree of the polyvinyl alcohol resin is ordinarily, preferably 1,000 to 10,000, and more preferably 1,500 to 6,000.

Examples of the derivative of the polyvinyl alcohol resin that can be used in the invention include resins that have been subjected to the modification treatment, and the like.

A film produced from such a polyvinyl alcohol resin or a derivative thereof (hereinafter, referred to as the polyvinyl alcohol-based resin for both of them) is used as a raw film. A method of producing a film from the polyvinyl alcohol resin is not particularly limited, but the film may be produced with a known method. The polyvinyl alcohol-based resin film can contain glycerin, ethylene glycol, propylene glycol or low molecular polyethylene glycol and the like as a plasticizer. The

amount of the plasticizer is preferably 5 to 20 weight%, and more preferably 8 to 15 weight%. The thickness of the raw film that comprising the polyvinyl-based alcohol resin is not particularly limited, but is preferably, for example, 5 to 150 μm, and more preferably 10 to 100 μm.

The polyvinyl alcohol-based resin film is first performed with a swelling process. The swelling process is performed by dipping the polyvinyl alcohol-based resin film into a 20 to 50°C solution for 30 seconds to 10 minutes. The solution is preferably water. The swelling process may be skipped if it is desired to shorten the time to produce the polarizing element, as the polyvinyl alcohol-based resin film swells up also at the time of dye treatment of the pigments.

A dyeing process is performed after the swelling process. The dyeing process is a process in which impregnation is performed by dipping the polyvinyl alcohol-based resin film into a solution containing the dichromatic dye. The temperature of the solution in this process is preferably 5 to 60°C, more preferably 20 to 50°C, and particularly preferably 35 to 50°C. The dipping time to the solution may be suitably regulated, but is preferably regulated to 30 seconds to 20 minutes, and more preferably to 1 to 10 minutes. Although a method for the dyeing is preferably performed by dipping in the solution, the method for the dyeing may be also performed by applying the solution onto the polyvinyl alcohol-based resin film.

The solution containing the dichromatic dye may contain sodium chloride, sodium sulfate, sodium sulfate anhydride, sodium tripolyphosphate, and the like as a dyeing assistant. The content of the dyeing assistant may be adjusted to any concentration by the time or the temperature depending on the dye-affinity of the dye, but is preferably 0 to 5 weight%, and more preferably 0.1 to 2 weight%.

As a method for the pigment impregnation, the pigment impregnation may be performed by dipping the polyvinyl alcohol-based resin film into a solution containing the dichromatic dyes. Alternatively, the method may be a method in which the pigments are contained in a step of molding the raw film of the polyvinyl alcohol-based resin.

After the dyeing process, a washing process (hereinafter, referred to as a washing process 1) can be performed before proceeds to the next. The washing process 1 is a process of washing a dye solvent adhering to the surface of the polyvinyl alcohol-based resin film in the dyeing process. By performing the washing process 1, it is possible to suppress the dye from migration into the liquid to be treated in the following process. Water is generally used in the washing process 1. A washing method is preferably performed by dipping the polyvinyl alcohol-based resin film into the solution, but may be also performed by applying the solution onto the polyvinyl alcohol-based resin film. The washing time is not particularly limited, but preferably 1 to 300 seconds, and more preferably 1 to 60 seconds. The temperature of the solvent in the washing process 1 is necessarily a temperature where a hydrophilic polymer is not dissolved. The washing treatment is generally performed at 5 to 40°C.

After the dyeing process or the washing process 1, a process of incorporating a crosslinking agent and/or a water-resistant additive may be performed. As the crosslinking agent, for example, a boron compound such as boric acid, borax or ammonium borate; a multivalent aldehyde such as glyoxal or glutaraldehyde; a multivalent isocyanate-based compound such as a biuret type, an isocyanurate type or a block type; a titanium compound such as titanium-based oxysulfate; or the like may be used, but ethylene glycol glycidyl ether, polyamide epichlorohydrin, or the like may be used in addition. Examples of the water-resistant additive include succinic acid peroxide, ammonium persulfate, calcium perclorate, benzoin ethyl ether, ethylene glycol diglycidyl ether, glycerin diglycidyl ether, ammonium chloride or magnesium chloride and the like, but boric acid is preferably used. Using at least one or more kinds of the crosslinking agent and/or the water-resistant additive described above, a process of incorporating the crosslinking agent and/or the water-resistant additive is performed. The solvent at this time is preferably water, but is not limited thereto. The content concentration of the crosslinking agent and/or the water-resistant additive in the solvent in the process of incorporating the crosslinking agent and/or the water-resistant additive is preferably, for example, 0.1 to 6.0 weight%, and more preferably 1.0 to 4.0 weight% of the concentration with respect to the solvent for boric acid. The temperature of the solvent in this process is preferably 5 to 70°C, and more preferably 5 to 50°C. A method of incorporating the crosslinking agent and/or the water-resistant additive into the polyvinyl alcohol-based resin film is preferably dipping the polyvinyl alcohol-based resin film into the solution, but the solution may be also applied or coated onto the polyvinyl alcohol-based resin film. The treatment time in this process is preferably 30 seconds to 6 minutes, and more preferably 1 to 5 minutes. However, the crosslinking agent and/or the water-resistant additive are not necessarily incorporated, and this treatment process may be skipped when it is desired to shorten the time, or when cross-linking treatment or water-resistant treatment is unnecessary.

A stretch process is performed after performing the dyeing process, the washing process 1, or the process of incorporating the crosslinking agent and/or the water-resistant additive. The stretch process is a process of stretching the polyvinyl alcohol-based film monoaxially. The stretch method may be a wet stretch method or a dry stretch method.

When the stretch method is the dry stretch method, and the medium for stretch and heating is air medium, the temperature of the air medium is preferably normal temperature to 180°C. In addition, the humidity is processed preferably within 20% to 95% RH of the atmosphere. Examples of the heating method include inter-roll zone stretch, roll heating stretch, pressure stretch, infrared heating stretch and the like, but the stretch method is not limited. The stretch process may be performed by stretching in one stage, or may be performed by stretch in multi-stages of two or more stages.

When the stretch method is the wet stretch, the stretch is performed in water, a water-soluble organic solvent, or a mixed solution thereof. The stretch treatment is preferably performed while dipping the polyvinyl alcohol-based resin film in the solution containing the crosslinking agent and/or the water-resistant additive. As the crosslinking agent, for example, a boron compound such as boric acid, borax or ammonium borate; a multivalent aldehyde such as glyoxal or glutaraldehyde; a multivalent isocyanate-based compound such as a biuret type, an isocyanurate type, or a block type; a titanium-based compound such as titanium oxysulfate; or the like may be used. In addition, ethylene glycol glycidyl ether, polyamide epichlorohydrin, or the like may be used. Examples of the water-resistant additive include succinic acid peroxide, ammonium persulfate, calcium perclorate, benzoin ethyl ether, ethylene glycol diglycidyl ether, glycerin diglycidyl ether, ammonium chloride, magnesium chloride, or the like. The stretch is performed in a solution containing at least one or more kinds of the crosslinking agent and/or the water-resistant additive described above. The crosslinking agent is preferably boric acid. The concentration of the crosslinking agent and/or the water-resistant additive in the stretch process is preferably, for example, 0.5 to 15 weight%, and more preferably 2.0 to 8.0 weight%. The stretch ratio is preferably 2 to 8 times, and more preferably 5 to 7 times. The stretch temperature is preferably 40 to 60°C, and more preferably 45 to 58°C. The stretch time is ordinarily 30 seconds to 20 minutes, and more preferably 2 to 5 minutes. The wet stretch process may be performed by stretch in one stage, but may be also performed by stretch in multi-stages of two or more stages.

A washing process of washing the film surface (hereinafter, referred to as the washing process 2) may be performed after performing the stretch process, as a precipitate of the crosslinking agent and/or the water-resistant additive, or a foreign substance may adhere to the film surface. The washing time is preferably 1 second to 5 minutes. The washing method is preferably performed by dipping in a washing solution, but may be performed by applying or coating the solution onto the polyvinyl alcohol-based resin film. The washing treatment may be performed in one stage, or may be performed in multi-stages of two or more stages. The solution temperature of the washing process is not particularly limited, but ordinarily 5 to 50°C, and preferably 10 to 40°C.

Examples of the solvent used in the treatment processes hereto include, for example, solvents such as water, dimethyl sulfoxide, N-methyl pyrrolidone, alcohols such as methanol, ethanol, propanol, isopropyl alcohol, glycerin, ethylene glycol, propylene glycol, diethylene glycol, triethylene glycol, tetraethylene glycol or trimethylol propane, and amines such as ethylene diamine or diethylene triamine, but are not limited thereto. In addition, a mixture of one or more kinds of these solvents may be used. The solvent is most preferably water.

A dry process of the film is performed after the stretch process or the washing process 2. The dry treatment may be performed by natural drying, or removal of moisture on the surface by compression by a roll or an air knife, a water-absorbing roll, or the like may be performed in order to enhance the dry efficiency, and/or ventilation drying may be performed. The temperature for the dry treatment is preferably 20 to 100°C, and more preferably 60 to 100°C. The time for the dry treatment may be 30 seconds to 20 minutes, but is preferably 5 to 10 minutes.

By the method described above, it is possible to obtain the polyvinyl alcohol-based resin film polarizing element of the invention that is improved in the durability. A similar polarizing element may be produced by incorporating the dichromatic dye into a film obtained from an amylose-based resin, a starch-based resin, a cellulose-based resin, a polyacrylic acid salt-based resin and the like, and stretching and orientating the hydrophilic resin in the share orientation and the like, although the film onto which the dichromatic dye is adsorbed in the polarizing element, is not a polyvinyl alcohol-based resin. However, the polarizing element film that comprising the polyvinyl alcohol-based resin film is most suitable.

The obtained polarizing element is disposed with a transparent protection layer on one side, or both sides thereof, whereby to produce a polarizing plate. The transparent protection layer may be disposed as a coating layer of a polymer, or a laminate layer of the film. The transparent polymer or the film forming the transparent protection layer is preferably a transparent polymer or film having a high mechanical intensity and good heat stability. Examples of the substance used as a transparent protection layer include cellulose acetate resins or films thereof such as triacetyl cellulose and diacetyl cellulose, acrylic resins or films thereof, polyvinyl chloride resins or films thereof, Nylon resins or films thereof, polyester resins or films thereof, polyarylate resins or films thereof, cyclic polyolefin resins or films thereof of having a cyclic olefin such as norbornene as a monomer, polyolefins or copolymers having polyethylene, polypropylene, or a cyclo-based or norbornene skeleton, resins or polymer or films having imide and/or amide as the main chain or the side chain, and the like. In addition, resins or films thereof having mesomorphism may be disposed as a transparent protection layer. The thickness of the protection film is, for example, about 0.5 to 200 $\mu$m. The same kind or different kind of the resins or films thereof described above may be disposed on one side, or both sides in one or more layers, whereby to produce the polarizing plate.

In order to bond the transparent protection layer to the polarizing element, an adhesive is necessary. The adhesive is not particularly limited, but is preferably a polyvinyl alcohol-based adhesive. Examples of the polyvinyl alcohol-based adhesive include Gohsenol NH-26 (manufactured by The Nippon Synthetic Chemical Industry Co., Ltd.), Exceval RS-2117 (manufactured by KURARAY CO., LTD.) and the like, but are not limited thereto. The adhesive may be added with the crosslinking agent and/or the water-resistant additive. As the polyvinyl alcohol-based adhesive, a

maleic anhydride-isobutylene copolymer is used, and an adhesive mixed with a crosslinking agent may be used as necessary. Examples of the maleic anhydride-isobutylene copolymer include ISOBAM #18 (manufactured by KURARAY CO., LTD.), ISOBAM #04 (manufactured by KURARAY CO., LTD.), ammonia-modified ISOBAM #104 (manufactured by KURARAY CO., LTD.), ammonia-modified ISOBAM #110 (manufactured by KURARAY CO., LTD.), imidized ISOBAM #304 (manufactured by KURARAY CO., LTD.), imidized ISOBAM #310 (manufactured by KURARAY CO., LTD.) and the like. At this time, as the crosslinking agent, a water-soluble multivalent epoxy compound may be used. Examples of the water-soluble multivalent epoxy compound include DENACOL EX-521 (manufactured by Nagase Chemtex Corporation), TETRAD-C (manufactured by Mitsubishi Gas Chemical Company, Inc.) and the like. In addition, as the other adhesive other than the polyvinyl alcohol-based resin, a known adhesive such as urethane-based, acrylic-based, or epoxy-based may be also used. In addition, for the purpose of improving the adhesion force of the adhesive or improving the water resistance, an additive such as a zinc compound, a chloride, and an iodide may be incorporated at the same time in about 0.1 to 10 weight% of the concentration. The additive is not limited. After bonding the transparent protection layer with the adhesive, dry or heat treatment is performed at a suitable temperature to obtain a polarizing plate.

The obtained polarizing plate may be disposed with various functional layers for improvement of the view angle and/or improvement of the contrast, or a layer or film having improved brightness on the surface of the protection layer or the film that becomes a non-exposed surface later, especially when the polarizing plate is bonded to a display device of liquid crystal, organic electroluminescence, or the like. In bonding the polarizing plate to the film or the display device, an adhesive is preferably used.

This polarizing plate may have well-known various functional layers such as an anti-reflective layer, an anti-glare layer, a hard coat layer on the other surface, namely, the exposed surface of the protection layer or the film. A coating method is preferred in a production of this layer having various functions, but the film having the function may be also bonded through an adhesive or a bonding agent. In addition, the various functional layers may be a layer or film controlling the phase difference.

With the method described above, it is possible to obtain a polarizing element and a polarizing plate of the invention. A display using the polarizing element or the polarizing plate of the invention is a display having high reliability, having high contrast over a long time, and having high color reproducibility.

The thus-obtained polarizing element of the invention is disposed with a protection layer, or a function layer and a support, or the like as necessary, and is used in a liquid crystal projector, a calculator, a clock, a notebook computer, a word processor, a liquid crystal television, a polarizing lens, polarizing glasses, a car navigation and an indoor-outdoor measuring instrument, a display device, or the like as a polarizing plate bonded with a protection film.

Examples

Hereinafter, the invention is further described in detail with Examples. However, the invention is not limited thereto. Meanwhile, evaluations for the transmissivity and the polarization degree shown in Examples were performed as described below. In addition, "parts" below means "parts by weight".

The transmissivity when two pieces of polarizing plates obtained by bonding a protection film onto both sides of a polarizing element are superimposed such that the absorption-axis directions are identical, was assumed to be the parallel position transmissivity Tp, whereas the transmissivity when two pieces of the polarizing plate are superimposed such that the absorption axis directions orthogonally intersect, was assumed to be the orthogonal position transmissivity Tc.

A transmissivity T was calculated from the calculation formula described below in which a spectral transmissivity $\tau\lambda$ was obtained for every prescribed wavelength interval $d\lambda$ (herein, 5 nm) in a wavelength region of 400 to 700 nm. In the formula, $P\lambda$ represents spectral distribution of standard light (light source C), and $y\lambda$ represents 2-degree visual field color matching function.

[Mathematical Formula 1]

$$T=\frac{\int_{400}^{700} P\lambda \cdot y\lambda \cdot \tau\lambda \cdot d\lambda}{\int_{400}^{700} P\lambda \cdot y\lambda \cdot d\lambda}$$

The spectral transmissivity $\tau\lambda$ was measured using a spectrophotometer ["U-4100" manufactured by Hitachi, Ltd.].

The polarization degree Py was obtained with the calculation formula below from the parallel position transmissivity Tp and the orthogonal position transmissivity Tc.

$$Py = \{(Tp - Tc)/(Tp + Tc)\}1/2 \times 100$$

Further, a* and b* of the orthogonal hue were measured with the color system represented by JIS Z8729 (Color specification L*, a* and b* display systems and L*, u* and v* color spaces) with respect to the hue of the polarizing plate. Herein, the orthogonal hue means the hue measured in a state where two polarizing plate are superimposed such that the absorption axes orthogonally intersect, respectively. In the color spaces of L*, a* and b*, as much as each of a* and b* is close to zero, it represents that the hue shows neutral color.

Each of the transmissivities was measured using a spectrophotometer ["U-4100" manufactured by Hitachi, Ltd.].

Synthesis Example 1

<Production of pigment solution>

32.5 Parts of 2-aminonaphthalen-4,8-disulfonic acid (conventional name: C acid) were dissolved in 145 parts of water, and added to 140 parts of water containing 26 parts of 35% hydrochloric acid, and were added to 6. 9 parts of sodium nitrite at 15 to 20°C, and the mixture was diazotized over one hour. Then, an aqueous solution containing 13.7 parts of para-cresidine and 17.5 parts of 35% hydrochloric acid was added, and coupling was performed at 20°C over 4 hours while keeping pH to 3.0 to 3.5 with sodium acetate, until para-cresidine was not recognized with the spot test. Then, to the obtained aminoazo compound, 21.4 parts of 35% hydrochloric acid were added, and 6.9 parts of sodium nitrite were added at 10°C, and second diazotization was performed at 15 to 20°C over 2 to 3 hours. Then, this was added to an aqueous solution having 31.5 parts of N,N-bis(1-hydroxy-3-sulfo-6-naphtyl) amine (conventional name: di-J acid), 125 parts of water and 11 parts of soda ash, and further a solution of soda ash was poured to keep pH to 8.5 to 9.5, and second coupling was performed at 20°C over 3 hours until a disazo compound was not recognized with the spot test, to obtain a tetrakis compound. Then, to an aqueous solution of 25 parts of copper sulfate, 30.5 parts of monoethanol amine were added and the produced copper complex salt was added and copperization reaction was performed at 95°C over 10 hours until an unreacted substance was not recognized on a thin layer chromatography. The obtained solution was added with Sanuki salt in 25 weight% with respect to the residual quantity, salted out and filtered, and evaporated to dryness at 60°C, to produce the pigment represented by the compound 2 of the present application.

Example 1

<Production of polarizing element>

A polyvinyl alcohol-based resin film having a saponification degree of 99% or more and a thickness of 75 μm (VF series manufactured by KURARAY CO., LTD.) was dipped into 40°C warm water for 2 minutes to perform a swelling treatment. The swelling-treated film was dipped into a 45°C aqueous solution containing 0.05 weight% of pigment represented by compound 2 and 0.1 weight% of sodium tripolyphosphate, to perform adsorption of the dyes. The film

adsorbed with the dyes was washed with water, and after the washing, boric acid treatment was performed with a 40°C aqueous solution containing 2 weight% of boric acid for 1 minute. The obtained boric acid-treated film was treated in a 55°C aqueous solution containing 3.0 weight% of boric acid for 5 minutes while being stretched to 5.0 times. Washing was performed for 15 seconds with 30°C water with keeping the tension state of the obtained, boric acid-treated film. The dry treatment was immediately performed for the obtained treated film at 70°C for 9 minutes to obtain a polarizing element of 28 μm thickness. The obtained polarizing element and an alkali-treated triacetyl cellulose film having a thickness of 80 μm (TD-80U manufactured by FUJIFILM Corporation, abbreviated as TAC below) were laminated using a polyvinyl alcohol-based adhesive in the constitution of the polarizing element/adhesive layer/TAC, to obtain a polarizing plate as a laminate.

The obtained polarizing plate was cut to 40 mm x 40 mm, and bonded to a 1 mm transparent glass plate through an adhesive PTR-3000 (manufactured by NIPPON KAYAKU Co., Ltd) in the constitution of the polarizing element/adhesive layer/TAC/adhesive layer/transparent glass plate to obtain an evaluation sample.

Using the produced evaluation sample, the initial polarization property, the wavelength having the maximum polarization degree, and the color of the evaluation material were verified. Further, light irradiation test was performed with a xenon arc tester (SX-75 manufactured by Suga Test Instruments Co., Ltd.) at 100W and 70°C for 170 hours from the side of the polarizing element, and the change of the transmissivity before and after the light irradiation, and visual color change were verified.

Comparative Example 1

The evaluation sample was produced in a similar manner except that the pigment represented by the compound 2 used in Example 1 was changed to the pigment represented in Example 1 (the comparative compound 1) of JP 64-5623 B, and the initial polarization property, the wavelength having the maximum polarization degree, the color, and the transmissivity change before and after the light stability test, and visual color change were verified.

[Chemical Formula 9]

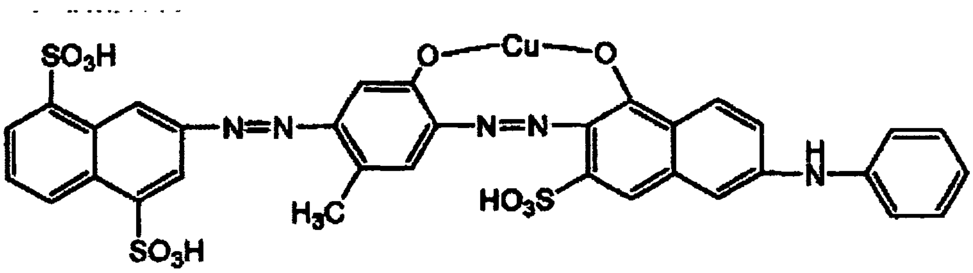

Comparative compound 1

Comparative Example 2

The evaluation sample was produced in a similar manner as in Example 1 except that the pigment represented by the compound 2 used in Example 1 was changed to the comparative compound 2 (Kayarus Supra Blue BWL143 manufactured by NIPPON KAYAKU Co., Ltd.), which is a dianisidine-based pigment, and the initial polarization property, the wavelength having the maximum polarization degree, the color, and the transmissivity change before and after the light stability test, and the visual color change were verified.

[Chemical Formula 10]

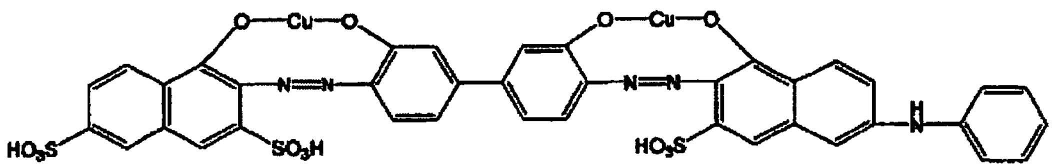

Comparative compound 2

Table 1 shows the results of the initial polarization property, the wavelength having the maximum polarization degree, the color, and the transmissivity change before and after the light stability test, and the visual color change of the evaluation samples obtained in Example 1 and Comparative Examples 1 and 2. For the polarization property, the case where the polarization degree of the obtained evaluation sample was visually high, was evaluated as Good, and the case where the polarization degree was visually low, was evaluated as NG. The transmissivity change after the light stability test was also visually verified, and the case where great color change was not recognized, was evaluated as Good, and the case where great color change was recognized, was evaluated as NG.

[Table 1]

| | Initial property | | | Light stability test | | |
|---|---|---|---|---|---|---|
| | Polarization property | Wavelength having maximum polarization degree (nm) | Color | Initial transmissivity | Transmissivity after light stability test | Color change |
| Example 1 | Good | 640 | blue | 42.30 | 42.33 | Good |
| Comparative Example 1 | Good | 610 | blue | 42.66 | 41.50 | NG |
| Comparative Example 2 | Good | 620 | blue | 42.70 | 41.69 | NG |

As shown in Table 1, the pigment of the invention was particularly favorable with respect to the initial polarization and the color, and a polarizing element having blue dye similar to a dianisidine-based pigment which has been conventionally used, was obtained. With regard to the light stability test, Example 1 showed nearly no change of the transmissivity, whereas Comparative Examples had greatly deteriorated transmissivity and great color change. These results show that the polarizing plate of Example 1 had high polarizing degree, and was also excellent in the light stability of high temperature and long-time exposure. The polarizing element or the polarizing plate of the invention makes it possible to obtain a liquid crystal display equipment, a lens, and the like having high contrast and high stability by being used in a liquid crystal projector, a calculator, a clock, a notebook computer, a word processor, a liquid crystal television, a polarizing lens, polarizing glasses, a car navigation and an indoor-outdoor measuring instrument, a display device and the like without use of a pigment corresponding to the specified chemical substance such as dianisidine.

## Claims

1. A polarizing element comprising a stretched film of a polyvinyl alcohol resin or a derivative thereof containing dichromatic pigments,
wherein at least one of the dichromatic pigments is an azo compound represented by Formula (1) or a salt thereof.

[Chemical Formula 1]

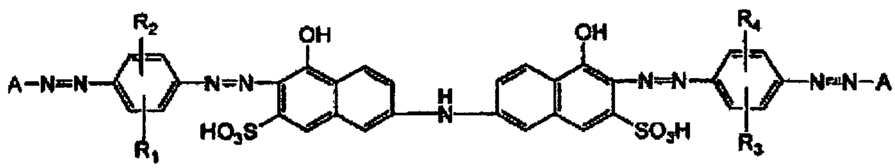

(1)

(wherein A represents a naphtyl group or a benzene ring that is unsubstituted or has one or more of substituents selected from a group consisting of a sulfo group, an alkyl group, an alkoxy group, an alkoxy group having a sulfo group, a carboxy group, a nitro group, an amino group, and a substituted amino group; and,
R1, R2, R3 and R4 each independently represent a hydrogen atom, an alkyl group, an alkoxy group, a sulfo group, or an alkoxy group having a sulfo group.)

2. The polarizing element according to claim 1, wherein the dichromatic pigment is an compound represented by

Formula (2), or a salt thereof.

[Chemical Formula 2]

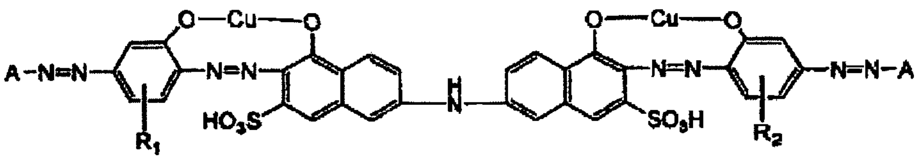

(2)

(wherein A represents a naphtyl group or a benzene ring that is unsubstituted or has one or more of substituents selected from a group consisting of a sulfo group, an alkyl group, an alkoxy group, an alkoxy group having a sulfo group, a carboxy group, a nitro group, an amino group, and a substituted amino group; and,
R1 and R2 each independently represent a hydrogen atom, an alkyl group, an alkoxy group, a sulfo group, or an alkoxy group having a sulfo group.)

3. A polarizing plate in which a protection layer is disposed on one side or both sides of the polarizing element according to claim 1 or 2.

**Patentansprüche**

1. Ein polarisierendes Element, umfassend einen gestreckten Film aus einem Polyvinylalkoholharz oder einem Derivat davon, der dichromatische Pigmente enthält,
wobei mindestens eines der dichromatischen Pigmente eine durch die Formel (1) dargestellte Azo-Verbindung oder ein Salz davon ist.

[Chemische Formel 1]

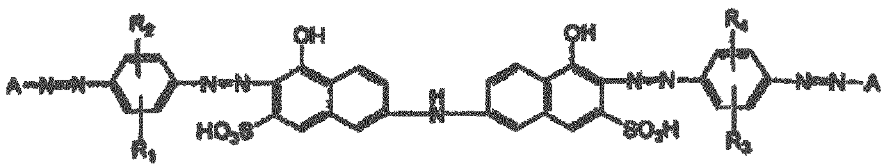

(1)

(wobei A eine Naphtylgruppe oder einen Benzolring darstellt, der unsubstituiert ist oder ein oder mehr Substituenten aufweist, ausgewählt aus einer Gruppe, die besteht aus einer Sulfogruppe, einer Alkylgruppe, einer Alkoxygruppe, einer Alkoxygruppe mit einer Sulfogruppe, einer Carboxygruppe, einer Nitrogruppe, einer Aminogruppe, und einer substituierten Aminogruppe; und
R1, R2, R3 und R4 jeweils unabhängig voneinander ein Wasserstoffatom, eine Alkylgruppe, eine Alkoxygruppe, eine Sulfogruppe, oder eine Alkoxygruppe mit einer Sulfogruppe darstellen.)

2. Ein polarisierendes Element nach Anspruch 1, wobei das dichromatische Pigment eine durch Formel (2), dargestellte Verbindung ist, oder ein Salz davon.

[Chemische Formel 2]

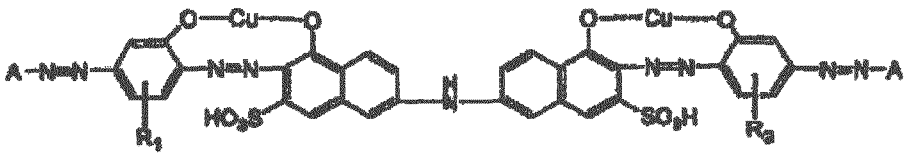

(2)

(wobei A eine Naphtylgruppe oder einen Benzolring darstellt, der unsubstituiert ist oder eine oder mehr Substituenten aufweist, die ausgewählt werden aus einer Gruppe, die besteht aus einer Sulfogruppe, einer Alkoxygruppe, einer Alkoxygruppe mit einer Sulfogruppe, einer Carboxygruppe, einer Nitrogruppe, einer Aminogruppe, und einer substituierten Aminogruppe; und
R1 und R2 jeweils unabhängig voneinander ein Wasserstoffatom, eine Alkylgruppe, eine Alkoxygruppe, eine Sulfogruppe, oder eine Alkoxygruppe mit einer Sulfogruppe darstellen.)

3. Eine polarisierende Platte, in der eine Schutzschicht auf einer der beiden Seiten des polarisierenden Elements nach Anspruch 1 oder 2 angeordnet ist.

**Revendications**

1. Élément de polarisation comprenant un film étiré d'une résine d'alcool polyvinylique ou un dérivé de celui-ci contenant des pigments dichromatiques, dans lequel au moins l'un des pigments dichromatiques est un composé azoïque représenté par la formule (1) ou un sel de celui-ci.

[formule chimique 1]

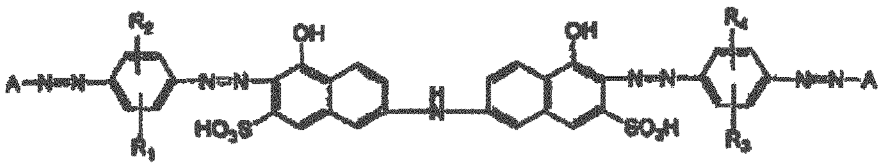

(1)

(dans laquelle A représente un groupe naphtyle ou un cycle de benzène qui est non substitué ou a un ou plusieurs substituants sélectionnés parmi le groupe consistant en un groupe sulfo, un groupe alkyle, un groupe alcoxyle, un groupe alcoxyle ayant un groupe sulfo, un groupe carboxyle, un groupe nitro, un groupe amino et un groupe amino substitué ; et
chacun de R1, R2, R3 et R4 représente indépendamment un atome d'hydrogène, un groupe alkyle, un groupe alcoxyle, un groupe sulfo ou un groupe alcoxyle ayant un groupe sulfo.)

2. Élément de polarisation selon la revendication 1, dans lequel le pigment dichromatique est un composé représenté par la formule (2) ou un sel de celui-ci.

[formule chimique 2]

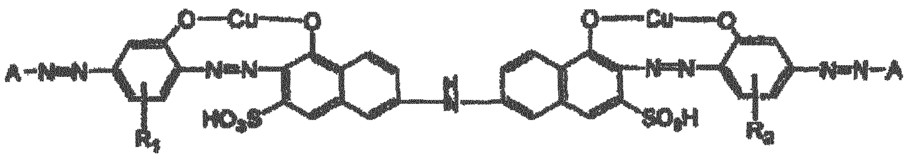

(2)

(dans laquelle A représente un groupe naphtyle ou un cycle de benzène qui est non substitué ou a un ou plusieurs substituants sélectionnés parmi le groupe consistant en un groupe sulfo, un groupe alkyle, un groupe alcoxyle, un groupe alcoxyle ayant un groupe sulfo, un groupe carboxyle, un groupe nitro, un groupe amino et un groupe amino substitué ; et
chacun de R1 et R2 représente indépendamment un atome d'hydrogène, un groupe alkyle, un groupe alcoxyle, un groupe sulfo ou un groupe alcoxyle ayant un groupe sulfo.)

3. Plaque de polarisation dans laquelle une couche de protection est disposée sur une côté ou les deux côtés de l'élément de polarisation selon l'une des revendications 1 ou 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 645623 B
- JP 7018192 A
- JP 2985408 B
- JP 2004075719 A
- JP 2001033627 A
- JP 2002296417 A
- JP 2003215338 A
- WO 2004092282 A
- JP 2001564112 A
- JP 2001027708 A
- JP 11218611 A
- JP 11218610 A
- JP 60156759 A


### Non-patent literature cited in the description


- **HOSODA YUTAKA.** *Dye chemistry*